# FASCICULE DE BREVET EUROPEEN

(11) **EP 2 637 275 B1**
(45) Date de publication et mention de la délivrance du brevet: **02.12.2020**
(21) Numéro de dépôt: 13305147.4
(22) Date de dépôt: 07.02.2013
(51) Int. Cl.: H02H 1/00, H02H 7/26, H02H 3/00

(54) **Procédé et dispositif de contrôle de la sélectivité d'appareils**
Verfahren und Vorrichtung zur Kontrolle der Selektivität von Geräten
Method and device for controlling the selectivity of electric equipment

(30) Priorité: 05.03.2012 FR 1200655
(43) Date de publication de la demande: 11.09.2013
(73) Titulaire: Schneider Electric Industries SAS, 92500 Rueil-Malmaison (FR)
(72) Inventeur: Guillot, Matthieu, 38050 GRENOBLE Cedex 09 (FR); Hypolite, Jean-Marie, 38050 GRENOBLE Cedex 9 (FR); Houdray, Marc, 38050 GRENOBLE Cedex 09 (FR)
(74) Mandataire: Lavoix

(56) Documents cités:
- EP-A2- 2 408 080
- WO-A1-2011/039074

## Description

### DOMAINE TECHNIQUE

L'invention concerne un procédé de contrôle de la sélectivité d'appareils électriques.

L'invention concerne un dispositif de contrôle de la sélectivité d'appareil électrique comportant des moyens de traitement et des moyens de communication destinés à être connectés à au moins un appareil électrique mettant en œuvre le procédé.

L'invention concerne aussi une installation électrique, comportant un contrôle de la sélectivité d'appareils électriques comportant des moyens de traitement et des moyens de communication destinées à être connectés à un appareil électrique, mettant en œuvre le procédé.

### ETAT DE LA TECHNIQUE

La sélectivité consiste à proposer une meilleure disponibilité d'une installation électrique en limitant les coupures d'un réseau électrique au plus proche d'un défaut. Les dispositifs de contrôle de la sélectivité connus concernent en particulier des réglages manuels pour adapter une sélectivité ampère-métrique en réglant un disjoncteur aval à un seuil de courant inférieur par rapport à un disjoncteur amont. Un autre contrôle de la sélectivité concerne la sélectivité chronométrique dans laquelle un disjoncteur aval à une temporisation inférieure par rapport à un disjoncteur amont. Ces réglages sont déterminés par des tables de sélectivité préétablies. Une autre sélectivité connue concerne la sélectivité logique dans laquelle les disjoncteurs sont connectés par des liaisons spéciales en amont et/ou en aval. Dans ce cas, un appareil ayant détecté un défaut passe en temporisation minimale s'il n'a pas l'information qu'un disjoncteur en aval a aussi détecté un défaut. Ainsi, le disjoncteur le plus proche du défaut ouvre le circuit sans provoquer l'ouverture des disjoncteurs en amont.

Les dispositifs de l'état de la technique ne permettent pas de suivre les sélectivités durant le fonctionnement des installations électriques. De plus, il est très difficile de tenir compte d'une manière globale de la sélectivité lors d'une évolution ou de la maintenance d'une installation. Par exemple, un simple changement de réglage ou un changement d'appareil risque de rompre la chaine de réglage optimisée pour la sélectivité.

EP2408080A2 divulgue un système de protection avec des réglages à énergie réduite pour mettre en place une sélectivité logique. Mais ce système ne permet pas de tenir compte d'une manière globale de la sélectivité lors d'une évolution ou de la maintenance d'une installation.

### EXPOSE DE L'INVENTION

L'invention a pour but un procédé et un dispositif de contrôle de sélectivité ayant un fonctionnement automatisé et contrôlant des modifications d'installation électrique, et une installation mettant en œuvre ce procédé.

Selon l'invention, conformément à la revendication 1, un procédé de contrôle de la sélectivité d'appareil électrique de protection d'une installation comportant au moins un appareil électrique amont et au moins un appareil électrique aval et un dispositif de traitement d'information, ce procédé comportant les étapes suivantes :
- l'entrée, dans le dispositif de traitement d'information, de données représentatives d'un schéma électrique de l'installation;
- la communication de réglages d'appareils électriques entre au moins un desdits appareils électriques et le dispositif de traitement d'information,
- le calcul de la sélectivité, par le dispositif de traitement d'information, des appareils électriques en fonction desdits réglages d'appareils électriques et desdites données du schéma électrique,
- le réglage d'au moins un des appareils électriques en fonction de nouveaux réglages déterminés par le calcul de sélectivité ;
- le stockage et la communication de données représentatives des nouveaux réglages et desdites données de sélectivité,
- la surveillance, par le dispositif de traitement d'information, de changement de réglages et/ou de changement d'appareil, et
- le contrôle, par le dispositif de traitement d'information, de compatibilité entre lesdits nouveaux réglages après changement et le calcul de sélectivité

Avantageusement, le procédé de contrôle comporte la signalisation d'une incompatibilité entre des réglages desdits appareils électriques et le résultat du calcul de sélectivité.

De préférence, des données de sélectivité sont communiquées et calculées entre des ensembles d'appareils électriques.

Avantageusement, lesdites nouvelles données de sélectivité sont communiquées à un superviseur.

De préférence, le calcul de la sélectivité est déclenché à chaque changement d'appareil électrique ou à chaque changement de réglage d'au moins un appareil électrique.

Dans un dispositif de contrôle de la sélectivité d'appareil électrique selon l'invention comportant un dispositif de traitement d'information et de sélectivité comportant un circuit de communication apte à être connecté à au moins un appareil électrique amont et à au moins un appareil électrique aval ; caractérisé en ce que le dispositif de traitement d'information est configuré pour :
- recevoir des données représentatives d'un schéma électrique de l'installation entrées dans le dispositif de traitement d'information ;
- communiquer, au moyen du circuit de communication, des réglages d'appareils électriques entre au moins un desdits appareils électriques et le dispositif de traitement d'information,
- calculer la sélectivité d'appareils électriques en fonction desdits réglages d'appareils électriques et des données de schéma électrique,
- régler au moins un des appareils électriques en fonction de nouveaux réglages déterminés par le calcul de sélectivité ;
- stocker et communiquer des données représentatives des nouveaux réglages et desdites données de sélectivité,
- surveiller un changement de réglages et/ou de changement d'appareil, et
- contrôler la compatibilité entre lesdits nouveaux réglages après changement et le calcul de sélectivité..

De préférence, ledit dispositif de traitement d'information comporte :
- un module de stockage des réglages d'appareils électriques,
- un circuit de traitement effectuant les calculs de la sélectivité entre au moins deux appareils électriques,
- des moyens d'indication de la sélectivité.

Avantageusement, le circuit de communication permet de communiquer des données de réglages électriques entre au moins un desdits appareils électriques et le dispositif de traitement d'information pour traiter lesdites données de réglage

Avantageusement, le dispositif de traitement d'information est configuré pour comparer, pour chaque type de protection, des données de réglage ayant servi au calcul de la sélectivité et des données de réglages fournies par des appareils.

Avantageusement, le dispositif de traitement d'information est configuré pour signaler une incompatibilité entre des réglages desdits appareils électriques et des données de calcul de sélectivité.

De préférence, le dispositif de traitement d'information est configuré pour contrôler la sélectivité en permanence ou à chaque intervention ou changement de réglage d'appareil électrique.

De préférence, les appareils électriques sont des disjoncteurs, des déclencheurs ou des relais de protection, et les réglages concernent des seuils, des temporisations et/ou des courbes de déclenchement, appliquées à des protections de surcharge électrique, de court-circuit, de protection terre, de fuite de courant et/ou à des contrôles de charge.

Avantageusement, le dispositif de contrôle est configuré pour recevoir des données de réglages :
- d'au moins un appareil électrique connecté à un réseau électrique moyenne tension ou de tension supérieure à 1000 Volts, et
- d'au moins un appareil électrique connecté à un réseau électrique basse-tension ou de tension inférieure à 1000 Volts.

Dans une Installation électrique selon l'invention comportant un dispositif de contrôle de la sélectivité d'appareils électriques, le dispositif de contrôle est tel que défini ci-dessus.

Avantageusement, l'installation électrique comportant des appareils électriques connectés entre eux par des réseaux ou des lignes électriques en amont et/ou en aval comporte au moins un dispositif tel que défini ci-dessus connecté par des moyens de communication auxdits appareils électriques pour recevoir des données de réglage.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un dispositif de contrôle de la sélectivité selon un mode de réalisation de l'invention ;
- la figure 2 représente un schéma d'une installation électrique comportant un contrôle de la sélectivité d'appareils électriques selon un mode de réalisation l'invention ;
- les figures 3 à 5 représentent des installations selon des variantes de modes de réalisation de l'invention ;
- la figure 6 représente un organigramme d'un procédé de contrôle de la sélectivité d'appareils électriques selon un mode de réalisation de l'invention.

### DESCRIPTION DETAILLEE DE MODES DE REALISATION PREFERES

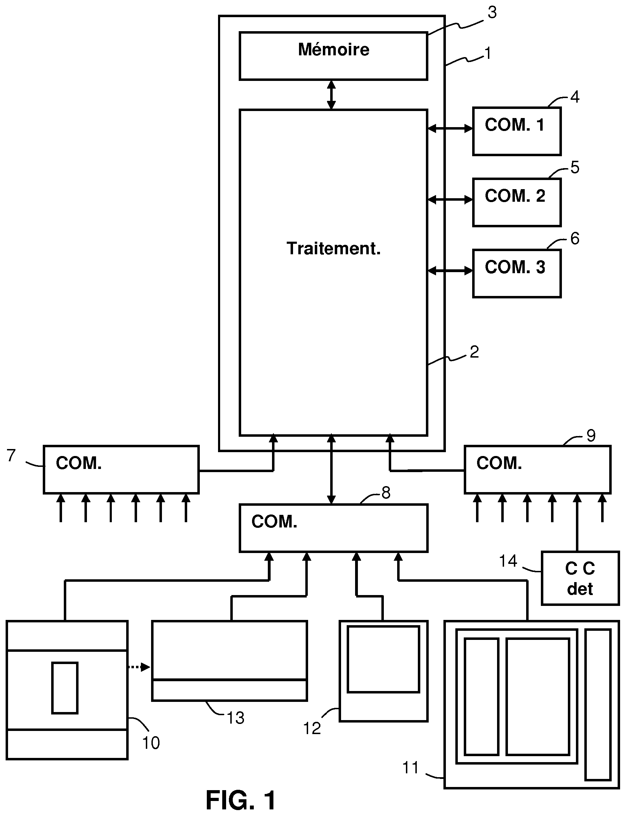

Le dispositif de contrôle de la sélectivité selon un mode de réalisation de l'invention représenté sur la figure 1, comporte un module de traitement 1 représentés par un boîtier 1 comportant un circuit de traitement 2 effectuant tous les calculs et la gestion de communications ainsi que la réception et l'émission de données. Le module 1 comprend aussi un module 3 de stockage de données représentatives de réglages d'appareils électriques et/ou de données de sélectivité. Le module 3 de stockage mémorise aussi le schéma de l'installation électrique avec les connexions des appareils et leur type. Ces données peuvent être partagées, échangées ou dupliquées avec un superviseur ou d'autres modules de stockage. Pour communiquer avec d'autres dispositifs ou un superviseur, le module de traitement comporte au moins un circuit de communication 4 par voie filaire, et/ou un circuit de communication 5 sans fil, et/ou un circuit de communication 6 par réseau téléphonique cellulaire.

Après un réglage des appareils électriques, le calcul individuel de la sélectivité est réalisé entre au moins deux appareils électriques connectés en amont-aval. Puis chaque calcul est globalisé pour contrôler les chaines de sélectivité entre l'appareil le plus en amont et les appareils les plus en aval. Si le calcul est convergent dans sa globalité, les réglages et les paramètres de sélectivité sont enregistrés dans les modules de stockage. Si la sélectivité présente une anomalie, cette anomalie est signalée en local ou à un superviseur via des modules de communication 4, 5 ou 6. La visualisation sur un superviseur peut être représentée par un schéma filaire global ou partiel de l'installation montrant les états de chaque appareil ainsi que les références, les caractéristiques et les réglages. La signalisation peut être faite aussi sur des ordinateurs portables, des tablettes or des téléphones portables en liaisons sans fil ou par réseau de téléphonies cellulaire.

Un dispositif de contrôle selon un mode de réalisation de l'invention comporte un réseau de communication de réglages électriques entre les appareils électriques et les moyens de traitement pour communiquer des données de réglage. Le réseau de communication peut comporter les modules concentrateurs de communication 7, 8, 9 pour réduire le nombre d'entrées de communication du module de traitement. Les concentrateurs sont connectés à plusieurs appareils électriques 10, 11, 12, 13, 14 pour communiquer entre autres des informations de réglages et de type et de références d'appareils au module de traitement 2 en regroupant les messages sur un canal de communication.

Les appareils électriques sont notamment des disjoncteurs 10, 11, avec par exemple, des déclencheurs électroniques ou des relais de protection. Les appareils peuvent être aussi des modules ou des relais 12 différentiels, de détection de fuite à la terre, des modules de mesure de puissance 13 associés de préférence à des appareils de coupures tels que des disjoncteurs ou des contacteurs. De même, des détecteurs de courts-circuits 14 peuvent donner des informations d'état d'une ligne électrique ou d'une charge pour éviter la fermeture d'un appareil ou localiser un défaut électrique de courts-circuits.

Les réglages fournis par les appareils concernent notamment des seuils de courant, des temporisations et/ou des courbes de déclenchement, appliqués à des protections de surcharge électrique, des protections de court-circuit, des protections terre, de fuite de courant et/ou à des contrôles de charge. Ainsi, pour chaque type de protection, il peut y avoir un seuil, une temporisation et un type de courbe. Le calcul de la sélectivité est de préférence réalisé séparément, manuellement ou à l'aide de logiciels, pour chaque type de protection et en fonction du schéma filaire préalablement entré en mémoire.

Le module de calcul compare pour chaque type de protection des données de réglage ayant servi au calcul de la sélectivité et des données de réglages fournies par des appareils. Lorsque des nouveaux réglages sont détectés et/ou la sélectivité est calculée, le module de traitement commande la signalisation si une incompatibilité est détectée entre les réglages des appareils électriques et des données de calcul de sélectivité. Ainsi, le module de contrôle de la sélectivité contrôle la sélectivité en permanence ou à chaque intervention ou changement de réglage d'au moins un appareil électrique. Un historique est ainsi constitué pour permettre la traçabilité de toute intervention.

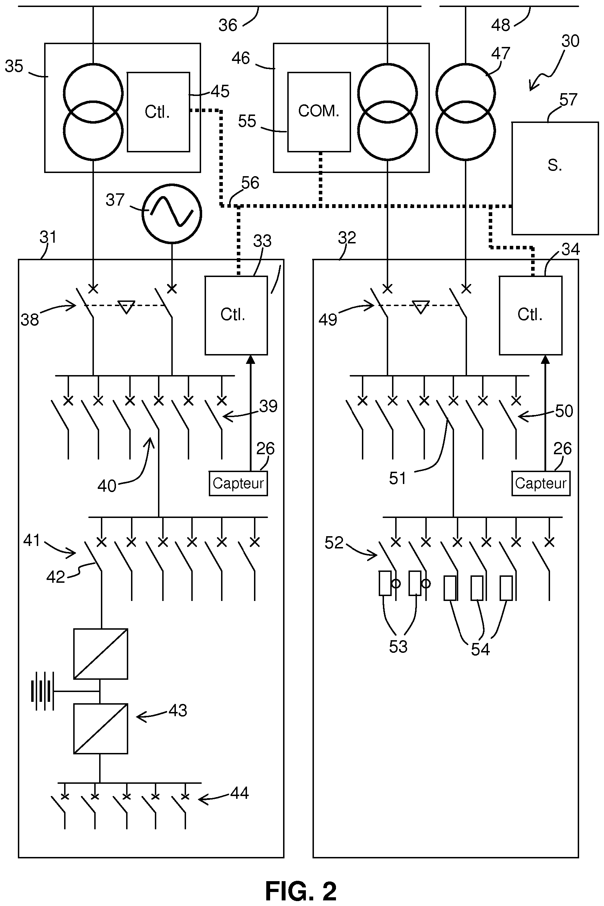

La figure 2 représente un schéma d'une installation électrique 30 comportant un contrôle de la sélectivité d'appareils électriques selon un mode de réalisation de l'invention. Sur cette figure l'installation comporte 2 armoires, cellules ou tableaux électriques 31, 32 comportant chacune un dispositif de contrôle de la sélectivité respectivement 33 et 34.

L'armoire 31 est alimentée d'une part par un poste de transformation 35 connecté en amont à un réseau électrique moyenne tension 36 et d'autre part par un générateur autonome 37. Ces deux alimentations basses tensions arrivent sur un inverseur de source 38 composé deux disjoncteurs télécommandés et verrouillés mécaniquement. En aval de l'inverseur, l'alimentation est fournie à un premier groupe 39 de disjoncteurs. Puis, un disjoncteur 40 du groupe 39 alimente un second groupe 41. Un disjoncteur 42 du second groupe alimente en aval un dispositif de conversion et de stockage d'énergie électrique 43, puis un troisième groupe de 44 de disjoncteurs. Le poste de transformation 35 peut comporter également des disjoncteurs ou des sectionneurs en amont sur la moyenne tension et sur le coté basse tension. La chaine de sélectivité comporte plusieurs niveaux depuis le poste de transformation jusque au plus petit disjoncteur du groupe 44. Si certains disjoncteurs ne comportent pas de moyens de communication essentiellement des disjoncteurs finaux de petite taille, les valeurs de réglages, de type et/ou de taille sont entrées manuellement lors de l'entrée du schéma de l'installation. Les appareils comportant un dispositif de communication envoient des données de réglages au dispositif de contrôle 33. Le poste de transformation 35 comporte aussi un dispositif de contrôle 45 pouvant communiquer avec le dispositif de contrôle 33 pour le calcul de la sélectivité globale.

L'armoire 32 est alimentée d'une part par un poste de transformation 46 connecté en amont à un réseau électrique moyenne tension 36 et d'autre part par un transformateur 47 à un second réseau électrique moyenne tension 48. En aval du poste 46 et du transformateur 47, deux alimentations basses tensions arrivent sur un inverseur de source 49 composé de deux disjoncteurs télécommandés et verrouillés mécaniquement. En aval de l'inverseur, l'alimentation est fournie à un premier groupe 50 de disjoncteurs. Puis, un disjoncteur 51 du groupe 50 alimente un second groupe 52 de disjoncteurs. Les appareils comportant un dispositif de communication envoient des données de réglages au dispositif de contrôle 34. Dans l'armoire 32, des contrôleurs d'isolement ou de fuite à la terre et des relais différentiels 53 disposés ou connectés sur des départs communiquent aussi au dispositif de contrôle 34 des données pouvant servir aux calculs de la sélectivité en protection terre notamment. De même, des détecteurs de courts-circuits 54 disposés sur des départs permettent de localiser des défauts de ligne ou de charge. Un dispositif de communication 55 disposé dans le poste de transformation 46 peut envoyer au dispositif de contrôle 34 aussi des données de réglage ou de taille servant au calcul de la sélectivité.

Les dispositifs de contrôles utilisés pour le contrôle des états, des réglages et caractéristiques, et pour le contrôle de la sélectivité sont connectés entre eux par un réseau de communication 56 et à un superviseur 57.

Les dispositifs de contrôle de la sélectivité disposés dans les armoires 31 et 32 peuvent recevoir des informations
- d'au moins un appareil électrique 35 connecté à un réseau électrique 36 moyenne tension ou de tension supérieure à 1000 Volts, et
- d'au moins un appareil électrique 40 connecté à un réseau électrique basse-tension ou de tension inférieure à 1000 Volts.

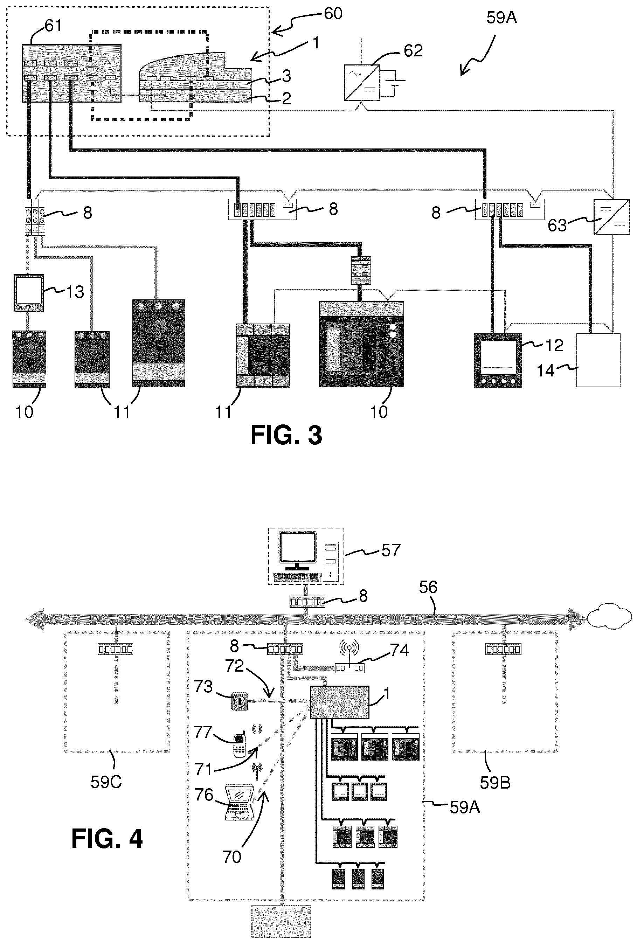

La figure 3 montre un autre schéma d'une partie d'installation 59 avec un dispositif de contrôle de la sélectivité ayant dans un boitier 60 de traitement de la sélectivité comprenant un module de traitement 1 et un module 61 de gestion des circuits de communication et des entrée-sorties de divers capteurs. Le circuit 61 est connecté à des concentrateurs de communication 8 recevant des informations depuis des appareils électriques 10 à 14. Les concentrateurs et les circuits de communication des appareils sont, par exemple, alimentés par les circuits d'alimentation comprenant des convertisseurs 62 et 63 ainsi que des lignes 64 et 65.

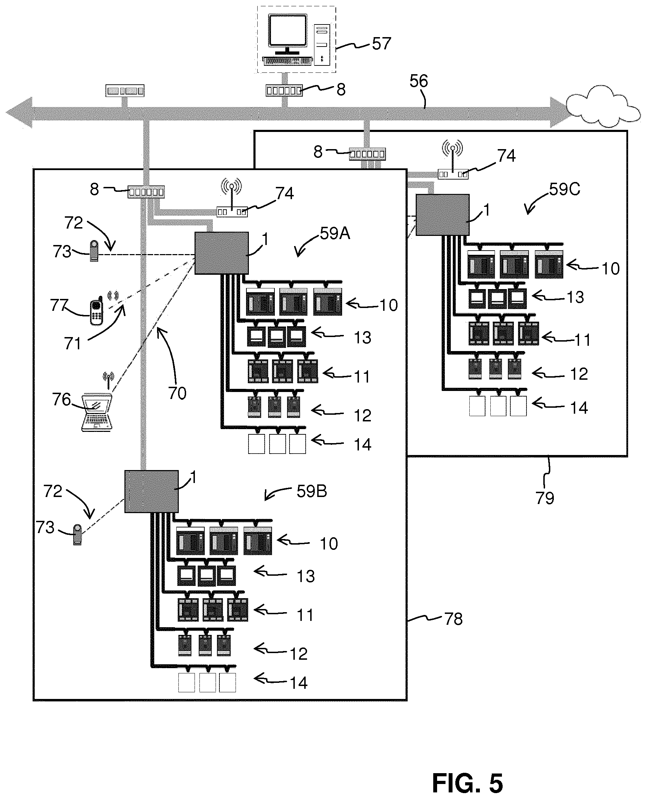

Les figures 4 et 5 représentent des installations selon des variantes de modes de réalisation de l'invention. Sur la figure 4, des parties d'installation 59A, 59B, 59C sont connectées à un réseau de communication 56 connecté à un superviseur 57. Ainsi le calcul de la sélectivité est global est peut être surveillé par un opérateur central ou distant. Pour assurer une sécurité et robustesse de la surveillance de la sélectivité, le calcul de sélectivité peut être fait dans chaque dispositif de contrôle de sélectivité. De plus, les données de schéma, de réglage et de calcul de la sélectivité sont de préférence échangées, comparées et consolidées dans chaque module de mémorisation des dispositifs de contrôle.

La partie d'installation 59A comporte une liaison de communication sans fil 70, une liaison de communication de téléphone cellulaire 71, et une liaison de communication radio 72 pour communiquer avec le module 60 de traitement de la sélectivité. La liaison 72 est par exemple utilisée par un boitier 73 de commande d'ouverture ou de fermeture d'un appareil électrique tel qu'un disjoncteur télécommandé, un contacteur, ou un disjoncteur contacteur. Les liaisons 70 et 71 sont par exemple utilisées par un opérateur local pour être informé sur l'état de l'installation le schéma, les données de réglage et/ou les données de calcul de la sélectivité et pour modifier lesdites données. Un module de communication sans fil 74 est connecté à un concentrateur 8 pour communiquer par exemple avec le superviseur ou avec d'autre partie de l'installation. Ainsi, la signalisation de la modification de la sélectivité ou d'un défaut d'intégrité de sélectivité peut être faite aussi sur des ordinateurs portables 76, des tablettes en liaisons sans fil 70 ou sur des téléphones portables 77 ou tablette par réseau de téléphonies cellulaire 71.

Sur la figure 5 des parties d'installation 59A et 59B sont par exemple dans un même local. Ainsi, certaines liaisons 70, 71 et modules 74 peuvent êtres mutualisés dans le même local 78. Les liaisons 72 avec les boitiers de télécommande sont associées à chaque module de traitement 1. Dans un autre local 79, une autre partie d'une installation 59C est connectée au superviseur et aux parties 59A, 59B à travers le réseau de communication 56.

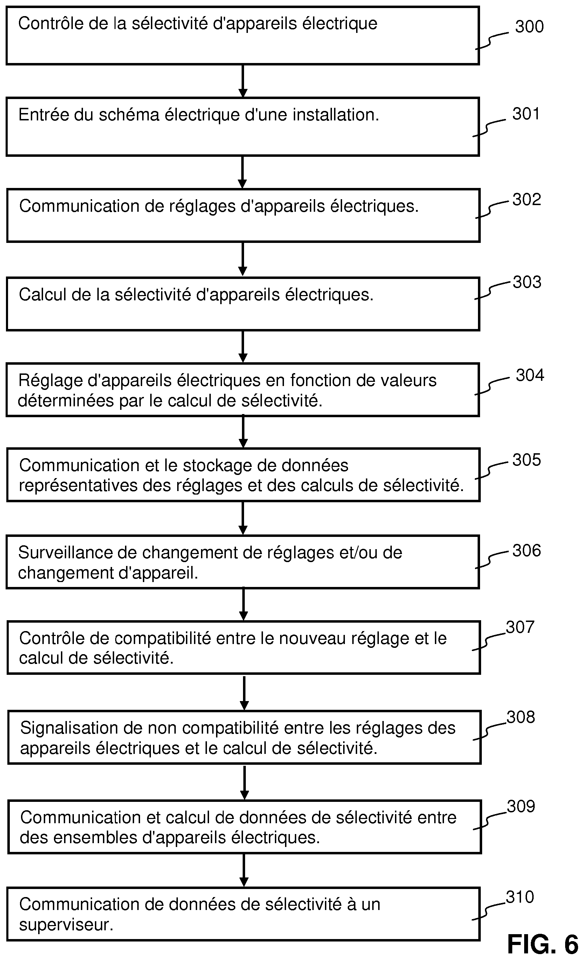

La figure 6 représente organigramme d'un procédé de contrôle de la sélectivité d'appareils électriques selon un mode de réalisation de l'invention. L'étape 300 initialise le contrôle de la sélectivité des appareils électriques. Elle mémorise notamment les caractéristiques de chaque type ou référence d'appareils électriques pouvant être utilisés dans l'installation. L'étape 301 permet l'entrée du schéma de l'installation électrique. Le schéma est entré sous forme unifilaire en définissant les points de connexion en amont et en aval ainsi que les références de chaque appareil et les réglages au moins pour les appareils sans dispositifs de communication. Le schéma peut être entré par des outils graphique ou importé par d'autres logiciels.

Ensuite une étape 302 réalise la communication de réglages d'appareils électriques entre au moins un appareil électrique et un concentrateur d'information ou un dispositif de traitement de la sélectivité. Une étape 303 effectue le calcul de la sélectivité d'appareils électriques en fonction desdits réglages d'appareils électriques. Le calcul de la sélectivité prend en compte des données de schéma électrique avec les connexions des appareils, les données de réglage desdits appareils entrées automatiquement par communication et éventuellement entrées manuellement pour des petits appareils sans communication. Une étape 304 permet le réglage d'appareils électriques en fonction de valeurs de réglages déterminées par le calcul de sélectivité. Cette étape 304 peut servir à un paramétrage initial ou à des réglages suivants. Ainsi ces réglages suivants peuvent être effectués manuellement, par téléréglage, de manière automatique par chargement de valeur à travers les dispositifs de communication, ou de manière semi automatique avec des réglages manuels, des téléréglages, et des réglages automatiques. Les parties automatiques des réglages sont de préférence soumises à autorisation et/ou acquittement. Une étape 305 réalise le stockage et la communication de données représentatives des nouveaux réglages et des données de sélectivité. Une étape 306 opère la surveillance de changement de réglages et/ou de changement d'appareil. Puis une étape 307 contrôle la compatibilité entre des nouveaux réglages après changement et le calcul de sélectivité.

En cas de non compatibilité, une étape 308 lance la signalisation de non compatibilité entre des réglages des appareils électriques et le calcul de sélectivité. La signalisation peut être réalisée en local, transmise à l'ensemble des modules de contrôle de la sélectivité et/ou à un superviseur et/ou à une messagerie.

A une étape 309, les données de sélectivité sont communiquées et calculées entre des ensembles d'appareils électriques. A une étape 310, lesdites données de sélectivité sont communiquées à un superviseur pour une vision globale de la sélectivité des appareils de l'installation. Le déclenchement du calcul de la sélectivité peut être déclenché à chaque changement d'appareil électrique ou à chaque changement de réglage d'au moins un appareil électrique.

Dans les installations décrites ci-dessus les liaisons entre les appareils sont décrites avec un réseau filaire et des concentrateurs. Ces liaisons filaires sont des préférences avec le standard de communication industriel "MODBUS". Cependant d'autres standards peuvent être utilisés. Les liaisons peuvent aussi être des liaisons sans fils de types bien connus sous les noms de "WI-FI" ou "ZigBee"

## Revendications

1. Procédé de contrôle de la sélectivité d'appareils électriques de protection (10-14) d'une installation comportant au moins un appareil électrique amont et au moins un appareil électrique aval, et un dispositif de traitement d'information et de sélectivité (1, 2, 33, 34), lesdits appareils étant équipés d'un dispositif de communication, **caractérisé en ce que** le procédé comporte les étapes suivantes :
- l'entrée (301), dans le dispositif de traitement d'information (1, 2, 33, 34), de données représentatives d'un schéma électrique de l'installation ;
- la communication (302) de réglages d'appareils électriques entre au moins un desdits appareils électriques (10-14) et le dispositif de traitement d'information (1, 2, 33, 34),
- le calcul (303) de la sélectivité, par le dispositif de traitement d'information (1, 2, 33, 34), des appareils électriques en fonction desdits réglages d'appareils électriques et desdites données du schéma électrique,
- le réglage (304) d'au moins un des appareils électriques en fonction de nouveaux réglages déterminés par le calcul de sélectivité ;
- le stockage et la communication (305) de données représentatives des nouveaux réglages et desdites données de sélectivité,
- la surveillance (306), par le dispositif de traitement d'information (1, 2, 33, 34), de changement de réglages et/ou de changement d'appareil, et
- le contrôle (307), par le dispositif de traitement d'information (1, 2, 33, 34), de compatibilité entre lesdits nouveaux réglages après changement et le calcul de sélectivité.

2. Procédé de contrôle selon la revendication 1, **caractérisé en ce qu'**il comporte la signalisation (308) d'une incompatibilité entre des réglages desdits appareils électriques et le résultat du calcul de sélectivité.

3. Procédé de contrôle selon l'une des revendications 1 ou 2, **caractérisé en ce que** des données de sélectivité sont communiquées (309) et calculées entre des ensembles d'appareils électriques.

4. Procédé de contrôle selon l'une quelconque des revendications 1 à 3, **caractérisé en ce que** lesdites nouvelles données de sélectivité sont communiquées (310) à un superviseur (57).

5. Procédé de contrôle selon l'une quelconque des revendications 1 à 4, **caractérisé en ce que** le calcul de la sélectivité (303) est déclenché à chaque changement d'appareil électrique ou à chaque changement de réglage d'au moins un appareil électrique.

6. Dispositif de contrôle de la sélectivité d'appareils électriques de protection comportant un dispositif de traitement d'information et de sélectivité (1, 2, 33, 34) comportant un circuit de communication (4, 5, 6) apte à être connecté à au moins un appareil électrique amont et à au moins un appareil électrique aval (10-14, 38, 38, 41, 49, 50, 52) ; **caractérisé en ce que** le dispositif de traitement d'information (1, 2, 33, 34) est configuré pour :
- recevoir (301) des données représentatives d'un schéma électrique de l'installation entrées dans le dispositif de traitement d'information (1, 2, 33, 34);
- communiquer (302), au moyen du circuit de communication (4, 5, 6), des réglages d'appareils électriques entre au moins un desdits appareils électriques (10-14) et le dispositif de traitement d'information (1, 2, 33, 34),
- calculer (303) la sélectivité d'appareils électriques en fonction desdits réglages d'appareils électriques et des données du schéma électrique,
- régler (304) au moins un des appareils électriques en fonction de nouveaux réglages déterminés par le calcul de sélectivité ;
- stocker et communiquer (305) des données représentatives des nouveaux réglages et desdites données de sélectivité,
- surveiller (306) un changement de réglages et/ou de changement d'appareil, et
- contrôler (307) la compatibilité entre lesdits nouveaux réglages après changement et le calcul de sélectivité.

7. Dispositif de contrôle selon la revendication 6, **caractérisé en ce que** ledit dispositif de traitement d'information (1, 2, 33, 34) comporte :
- un module (3) de stockage des réglages d'appareils électriques,
- un circuit de traitement effectuant les calculs de la sélectivité entre au moins deux appareils électriques (10-14, 35, 38, 46, 49),
- des moyens d'indication de la sélectivité.

8. Dispositif de contrôle selon l'une des revendications 6 ou 7, **caractérisé en ce que** le circuit de communication (4, 5, 6) permet de communiquer des données de réglages électriques entre au moins un desdits appareils électriques et le dispositif de traitement d'information (1, 2, 33, 34) pour traiter lesdites données de réglage.

9. Dispositif de contrôle selon l'une quelconque des revendications 6 à 8, **caractérisé en ce que** le dispositif de traitement d'information (1, 2, 33, 34) est configuré pour comparer, pour chaque type de protection, des données de réglage ayant servi au calcul de la sélectivité et des données de réglages fournies par des appareils.

10. Dispositif de contrôle selon l'une quelconque des revendications 6 à 9, **caractérisé en ce que** le dispositif de traitement d'information (1, 2, 33, 34) est configuré pour signaler une incompatibilité entre des réglages desdits appareils électriques et des données de calcul de sélectivité.

11. Dispositif de contrôle selon l'une quelconque des revendications 6 à 10, **caractérisé en ce que** le dispositif de traitement d'information (1, 2, 33, 34) est configuré pour contrôler la sélectivité en permanence ou à chaque intervention ou changement de réglage d'appareil électrique.

12. Dispositif de contrôle selon l'une quelconque des revendications 6 à 11, **caractérisé en ce que** :
- les appareils électriques sont des disjoncteurs (10, 11), des déclencheurs ou des relais (13, 14) de protection, et
- les réglages concernent des seuils, des temporisations et/ou des courbes de déclenchement, appliquées à des protections de surcharge électrique, de court-circuit, de protection terre, de fuite de courant et/ou à des contrôles de charge.

13. Dispositif de contrôle selon l'une quelconque des revendications 6 à 12, **caractérisé en ce qu'**il est configuré pour recevoir des données de réglages :
- d'au moins un appareil électrique (35, 46, 47) connecté à un réseau électrique moyenne tension ou de tension supérieure à 1000 Volts, et
- d'au moins un appareil électrique (10-14, 38, 38, 41, 49, 50, 52) connecté à un réseau électrique basse-tension ou de tension inférieure à 1000 Volts.

14. Installation électrique comportant un dispositif de contrôle de la sélectivité d'appareils électriques de protection conforme à l'une quelconque des revendications 6 à 13.

15. Installation électrique selon la revendication 14 comportant des appareils électriques (10-14, 38, 38, 41, 49, 50, 52) connectés entre eux par des réseaux ou des lignes électriques en amont et/ou en aval **caractérisée en ce qu'**elle comporte au moins un dispositif (1, 33, 34, 45, 55) selon les revendications 6 à 13 connecté par des moyens de communication (3, 8, 56, 57) auxdits appareils électriques pour recevoir des données de réglage.

## Patentansprüche

1. Verfahren zur Kontrolle der Selektivität elektrischer Schutzgeräte (10-14) einer Anlage, die mindestens ein vorgeschaltetes elektrisches Gerät und mindestens ein nachgeschaltetes elektrisches Gerät sowie eine Informations- und Selektivitätsverarbeitungsvorrichtung (1, 2, 33, 34) umfasst, wobei diese Geräte mit einer Kommunikationsvorrichtung ausgestattet sind, **dadurch gekennzeichnet, dass** das Verfahren die folgenden Schritte umfasst:
- Eingabe (301) von Daten, die für ein Schaltbild der Anlage repräsentativ sind, in die Informationsverarbeitungsvorrichtung (1, 2, 33, 34);
- Kommunikation (302) von elektrischen Geräteeinstellungen zwischen mindestens einem der elektrischen Geräte (10-14) und der Informationsverarbeitungsvorrichtung (1, 2, 33, 34),
- Berechnung (303) der Selektivität der elektrischen Geräte durch die Informationsverarbeitungsvorrichtung (1, 2, 33, 34) in Abhängigkeit von den Einstellungen der elektrischen Geräte und den Daten des Schaltbildes,
- Einstellung (304) mindestens eines der elektrischen Geräte in Abhängigkeit von neuen Einstellungen, die durch die Selektivitätsberechnung bestimmt wurden;
- Speicherung und Kommunikation (305) von Daten, die für die neuen Einstellungen und die Selektivitätsdaten repräsentativ sind,
- Überwachung (306) von Änderungen der Einstellungen und/oder Geräteänderungen durch die Informationsverarbeitungsvorrichtung (1, 2, 33, 34) und
- Kontrolle (307) der Kompatibilität zwischen den neuen Einstellungen nach der Änderung und der Selektivitätsberechnung durch die Informationsverarbeitungsvorrichtung (1, 2, 33, 34).

2. Kontrollverfahren nach Anspruch 1, **dadurch gekennzeichnet, dass** es die Meldung (308) einer Inkompatibilität zwischen Einstellungen der elektrischen Geräte und dem Ergebnis der Selektivitätsberechnung umfasst.

3. Kontrollverfahren nach einem der Ansprüche 1 oder 2, **dadurch gekennzeichnet, dass** Selektivitätsdaten zwischen Gruppen von elektrischen Geräten übermittelt (309) und berechnet werden.

4. Kontrollverfahren nach einem der Ansprüche 1 bis 3, **dadurch gekennzeichnet, dass** die neuen Selektivitätsdaten an einen Überwacher (57) übermittelt werden (310).

5. Kontrollverfahren nach einem der Ansprüche 1 bis 4, **dadurch gekennzeichnet, dass** die Berechnung der Selektivität (303) bei jeder Änderung eines elektrischen Geräts oder bei jeder Einstellungsänderung mindestens eines elektrischen Geräts ausgelöst wird.

6. Vorrichtung zur Kontrolle der Selektivität elektrischer Schutzgeräte, mit einer Informations- und Selektivitätsverarbeitungsvorrichtung (1, 2, 33, 34), die eine Kommunikationsschaltung (4, 5, 6) umfasst, die mit mindestens einem vorgeschalteten elektrischen Gerät und mit mindestens einem nachgeschalteten elektrischen Gerät (10-14, 38, 38, 41, 49, 50, 52) verbunden werden kann, **dadurch gekennzeichnet, dass** die Informationsverarbeitungsvorrichtung (1, 2, 33, 34) konfiguriert ist, um:
- in die Informationsverarbeitungsvorrichtung (1, 2, 33, 34) eingegebene Daten zu empfangen (301), die für ein Schaltbild der Anlage repräsentativ sind;
- Einstellungen elektrischer Geräte zwischen mindestens einem der elektrischen Geräte (10-14) und der Informationsverarbeitungsvorrichtung (1, 2, 33, 34) mittels der Kommunikationsschaltung (4, 5, 6) zu übermitteln (302),
- die Selektivität der elektrischen Geräte in Abhängigkeit von den Einstellungen der elektrischen Geräte und den Daten des Schaltbildes zu berechnen (303),
- mindestens eines der elektrischen Geräte in Abhängigkeit von neuen Einstellungen, die durch die Selektivitätsberechnung bestimmt wurden, einzustellen (304);
- Daten zu speichern und zu kommunizieren (305), die für die neuen Einstellungen und die Selektivitätsdaten repräsentativ sind,
- Änderungen der Einstellungen und/oder Geräteänderungen zu überwachen (306), und
- die Kompatibilität zwischen den neuen Einstellungen nach der Änderung und die Selektivitätsberechnung zu kontrollieren (307).

7. Kontrollvorrichtung nach Anspruch 6, **dadurch gekennzeichnet, dass** die Informationsverarbeitungsvorrichtung (1, 2, 33, 34) umfasst:
- ein Modul (3) zum Speichern der Einstellungen von elektrischen Geräten,
- eine Verarbeitungsschaltung, welche die Berechnungen der Selektivität zwischen mindestens zwei elektrischen Geräten (10-14, 35, 38, 46, 49) durchführt, und
- Mittel zur Anzeige der Selektivität.

8. Kontrollvorrichtung nach einem der Ansprüche 6 oder 7, **dadurch gekennzeichnet, dass** die Kommunikationsschaltung (4, 5, 6) die Übertragung von elektrischen Einstelldaten zwischen mindestens einem der elektrischen Geräte und der Informationsverarbeitungsvorrichtung (1, 2, 33, 34) zur Verarbeitung der Einstelldaten ermöglicht.

9. Kontrollvorrichtung nach einem der Ansprüche 6 bis 8, **dadurch gekennzeichnet, dass** die Informationsverarbeitungsvorrichtung (1, 2, 33, 34) so konfiguriert ist, dass sie für jede Art von Schutz Einstelldaten, die zur Berechnung der Selektivität verwendet werden, und Einstelldaten, die von Geräten bereitgestellt werden, vergleicht.

10. Kontrollvorrichtung nach einem der Ansprüche 6 bis 9, **dadurch gekennzeichnet, dass** die Informationsverarbeitungsvorrichtung (1, 2, 33, 34) so konfiguriert ist, dass sie eine Inkompatibilität zwischen Einstellungen der elektrischen Geräte und Selektivitätsberechnungsdaten anzeigt.

11. Kontrollvorrichtung nach einem der Ansprüche 6 bis 10, **dadurch gekennzeichnet, dass** die Informationsverarbeitungsvorrichtung (1, 2, 33, 34) so konfiguriert ist, dass sie die Selektivität laufend oder bei jedem Eingriff oder jeder Änderung der Einstellung eines elektrischen Geräts überwacht.

12. Kontrollvorrichtung nach einem der Ansprüche 6 bis 11, **dadurch gekennzeichnet, dass**:
- die elektrischen Geräte Leistungsschalter (10, 11), Auslöser oder Schutzrelais (13, 14) sind und
- die Einstellungen Schwellwerte, Zeitverzögerungen und/oder Auslösekennlinien betreffen, die auf elektrische Überlast-, Kurzschluss-, Erdschluss-, Ableitstromschutz und/oder Lastkontrollen angewendet werden.

13. Kontrollvorrichtung nach einem der Ansprüche 6 bis 12, **dadurch gekennzeichnet, dass** sie konfiguriert ist zum Empfang von Einstelldaten
- mindestens eines elektrischen Gerätes (35, 46, 47), das an ein elektrisches Mittelspannungsnetz oder an ein elektrisches Netz mit einer Spannung von mehr als 1000 Volt angeschlossen ist, und
- mindestens eines elektrischen Gerätes (10-14, 38, 38 41, 49, 50, 52), das an ein elektrisches Niederspannungsnetz oder an ein Netz mit einer Spannung von weniger als 1000 Volt angeschlossen ist.

14. Elektrische Anlage mit einer Vorrichtung zur Kontrolle der Selektivität von elektrischen Schutzvorrichtungen nach einem der Ansprüche 6 bis 13.

15. Elektrische Anlage nach Anspruch 14, umfassend elektrische Geräte (10-14, 38, 38, 41, 49, 50, 52), die über vorgeschaltete und/oder nachgeschaltete elektrische Netze oder Leitungen miteinander verbunden sind, **dadurch gekennzeichnet, dass** sie mindestens eine Vorrichtung (1, 33, 34, 45, 55) nach den Ansprüchen 6 bis 13 umfasst, die über Kommunikationsmittel (3, 8, 56, 57) mit den elektrischen Geräten verbunden ist, um Einstelldaten zu empfangen.

## Claims

1. Method for controlling the selectivity of electrical protection devices (10-14) of an installation comprising at least one upstream electrical device and at least one downstream electrical device and an information and selectivity processing means (1, 2, 33, 34), said devices being equipped with a communication means, **characterised in that** the method comprises the following steps:
- inputting (301), into the information processing means (1, 2, 33, 34), of data representing a wiring diagram of the installation,
- communication (302) of electrical device settings between at least one of said electrical devices (10-14) and the information processing means (1, 2, 33, 34),
- calculation (303) of the selectivity, by the information processing means (1, 2, 33, 34), of the electrical devices as a function of said electrical device settings and of said data of the wiring diagram,
- adjustment (304) of at least one of the electrical devices as a function of new settings determined by the selectivity calculation,
- storage and communication (305) of data representing the new settings and of said selectivity data,
- monitoring (306), by the information processing means (1, 2, 33, 34), of a change of settings and/or of a change of device, and
- checking (307), by the information processing means (1, 2, 33, 34), of compatibility between said new settings after a change and the selectivity calculation.

2. Control method according to claim 1, **characterised in that** it comprises the signalling (308) of an incompatibility between settings of said electrical devices and the result of the selectivity calculation.

3. Control method according to either claim 1 or claim 2, **characterised in that** selectivity data are communicated (309) and calculated between sets of electrical devices.

4. Control method according to any one of claims 1 to 3, **characterised in that** said new selectivity data are communicated (310) to a supervisor (57).

5. Control method according to any one of claims 1 to 4, **characterised in that** the calculation of the selectivity (303) is triggered at each change of electrical device or at each change of setting of at least one electrical device.

6. Device for controlling the selectivity of electrical protection devices comprising an information and selectivity processing means (1, 2, 33, 34) comprising a communication circuit (4, 5, 6) which is capable of being connected to at least one upstream electrical device and to at least one downstream electrical device (10-14, 38, 38, 41, 49, 50, 52), **characterised in that** the information processing means (1, 2, 33, 34) is configured to:
- receive (301) data representing a wiring diagram of the installation inputted into the information processing means (1, 2, 33, 34),
- communicate (302), by means of the communication circuit (4, 5, 6), electrical device settings between at least one of said electrical devices (10-14) and the information processing means (1, 2, 33, 34),
- calculate (303) the selectivity of electrical devices as a function of said electrical device settings and of the data of the wiring diagram,
- adjust (304) at least one of the electrical devices as a function of new settings determined by the selectivity calculation,
- store and communicate (305) data representing the new settings and said selectivity data,
- monitor (306) a change of settings and/or a change of device, and
- check (307) the compatibility between said new settings after a change and the selectivity calculation.

7. Control device according to claim 6, **characterised in that** said information processing means (1, 2, 33, 34) comprises:
- a module (3) for storing the settings of electrical devices,
- a processing circuit which performs the calculations of the selectivity between at least two electrical devices (10-14, 35, 38, 46, 49),
- means for indicating the selectivity.

8. Control device according to either claim 6 or claim 7, **characterised in that** the communication circuit (4, 5, 6) allows the electrical settings data to be communicated between at least one of said electrical devices and the information processing means (1, 2, 33, 34) for processing of said setting data.

9. Control device according to any one of claims 6 to 8, **characterised in that** the information processing means (1, 2, 33, 34) is configured to compare, for each type of protection, setting data that have been used to calculate the selectivity and settings data provided by devices.

10. Control device according to any one of claims 6 to 9, **characterised in that** the information processing means (1, 2, 33, 34) is configured to signal an incompatibility between settings of said electrical devices and selectivity calculation data.

11. Control device according to any one of claims 6 to 10, **characterised in that** the information processing means (1, 2, 33, 34) is configured to control the selectivity permanently or at each intervention or change of electrical device setting.

12. Control device according to any one of claims 6 to 11, **characterised in that**:
- the electrical devices are circuit breakers (10, 11), tripping devices or protection relays (13, 14), and
- the settings relate to thresholds, time delays and/or tripping curves applied to electric overload, short-circuit, earth protection or current leakage protection and/or to load monitoring.

13. Control device according to any one of claims 6 to 12, **characterised in that** it is configured to receive settings data:
- of at least one electrical device (35, 46, 47) which is connected to an electrical system of medium voltage or with a voltage greater than 1000 volts, and
- of at least one electrical device (10-14, 38, 38, 41, 59, 50, 52) which is connected to an electrical system of low voltage or with a voltage less than 1000 volts.

14. Electrical installation comprising a device for controlling the selectivity of electrical protection devices according to any one of claims 6 to 13.

15. Electrical installation according to claim 14 comprising electrical devices (10-14, 38, 38, 41, 49, 50, 52) which are connected together by upstream and/or downstream electrical systems or lines, **characterised in that** it comprises at least one device (1, 33, 34, 45, 55) according to claims 6 to 13 which is connected by communication means (3, 8, 56, 57) to said electrical devices in order to receive setting data.
